# EUROPÄISCHE PATENTANMELDUNG

(11) **EP 1 462 324 A1**
(43) Veröffentlichungstag der Anmeldung: **29.09.2004**
(21) Anmeldenummer: 04007156.5
(22) Anmeldetag: 25.03.2004
(51) Int. Cl.: B60R 22/46

(54) **Pyrotechnischer Antrieb**

(30) Priorität: 28.03.2003 DE 20305088 U; 18.09.2003 DE 10343195
(71) Anmelder: TRW Automotive GmbH, 73553 Alfdorf (DE)
(72) Erfinder: Singer, Markus, 73262 Reichenback a. d. Fils (DE); Hönl, Wolf-Dieter, 73560 Böbingen (DE); Mödinger, Thomas, 73553 Aldorf (DE); Foussier, Patrick, 73571 Göggingen (DE)
(74) Vertreter: Sties, Jochen, Dipl.-Ing.

(57) **Zusammenfassung**

Bei einem Linearantrieb (20) mit einem Zylinder (22) und einem darin verschiebbar geführten Kolben (24), und mit einem Ritzel (30), ist der Kolben mit einer Verzahnung (32) versehen, die in das Ritzel greifen kann, um es bei einer Verschiebung des Kolbens in Drehung zu versetzen. Wenigstens ein nachgiebiges Element (34) ist vorgesehen, das beim Einlaufen der Verzahnung (32) in das Ritzel (30) ein Blockieren verhindert. Vorgeschlagen wird außerdem ein Gurtaufroller (10) mit einer Gurtspule (14) und einem Gurtstraffer, der einen solchen Linearantrieb (20) aufweist.

## Beschreibung

Die Erfindung betrifft einen pyrotechnischen Antrieb mit einem Zylinder und einem darin verschiebbar geführten Kolben, und mit einem Ritzel, wobei der Kolben mit einer Verzahnung versehen ist, die in das Ritzel greifen kann, um es bei einer Verschiebung des Kolbens in Drehung zu versetzen. Die Erfindung betrifft außerdem einen Gurtaufroller mit einer Gurtspule und einem Gurtstraffer, der einen derartigen Antrieb aufweist.

Der oben genannte Antrieb findet beispielsweise in einem Gurtaufroller Verwendung, wo es darauf ankommt, die Gurtspule innerhalb kürzester Zeit in Drehung zu versetzen, um eine Gurtlose zu beseitigen. Um die sonstige Funktion der anzutreibenden Einheit, also beispielsweise des Gurtaufrollers, nicht zu beeinträchtigen, ist es vorteilhaft, daß die Abtriebswelle sich frei drehen kann, solange der Antrieb noch nicht ausgelöst ist. Dies wird dadurch sichergestellt, daß der Kolben mit seiner Verzahnung im Ausgangszustand noch nicht im Eingriff mit dem Ritzel steht. Es muß aber gewährleistet sein, daß beim Einlauf der Verzahnung in das Ritzel der erste Zahn der Kolbenverzahnung in eine Zahnlücke des Ritzels trifft.

Die DE 198 46 227 A1 zeigt einen gattungsgemäßen Antrieb, bei dem zur Lösung des genannten Problems der erste Zahn der Kolbenverzahnung als Halbzahn mit verkürztem Zahnkopf ausgebildet ist.

Die Erfindung schafft einen weiteren pyrotechnischen Antrieb, bei dem ein sicherer Einlauf der Kolbenverzahnung in das Ritzel gewährleistet ist.

Dazu ist bei einem pyrotechnischen Antrieb der eingangs genannten Art vorgesehen, daß wenigstens ein nachgiebiges Element vorgesehen ist, das beim Einlauf des Ritzels in die Verzahnung ein Blockieren verhindert. Steht das Ritzel beim Einlauf der Kolbenverzahnung so ungünstig, daß der erste Zahn der Kolbenverzahnung auf einen Zahn des Ritzels trifft, dann kann es zum Blockieren kommen, wenn die von der Kolbenverzahnung auf den Zahn des Ritzels wirkende Kontaktkraft an der Berührungsstelle radial auf das Ritzel wirkt. Das nachgiebige Element erlaubt dennoch eine Weiterbewegung des Kolbens und damit eine Drehung des Ritzels, bis die beiden Verzahnungen korrekt ineinandergreifen.

Gemäß einer bevorzugten Ausführungsform ist ein Abtriebselement vorgesehen, wobei das nachgiebige Element zwischen dem Abtriebselement und dem Ritzel vorgesehen ist, wo es dem Ritzel ein Spiel gegenüber dem Abtriebselement gestattet. So kann bei einem ungünstigen Aufeinandertreffen der Zähne von Kolbenverzahnung und Ritzel das Ritzel aufgrund des Spiels gegenüber dem Abtriebselement ausweichen, bis das Ritzel so weit verdreht ist, daß die Verzahnungen des Kolbens und des Ritzels ineinandergreifen.

Gemäß einem zweiten Aspekt schafft die Erfindung einen Gurtaufroller mit einer Gurtspule und einem Gurtstraffer, der einen derartigen pyrotechnischen Antrieb aufweist. Der sichere Einlauf der Verzahnung des Ritzels gewährleistet einen zuverlässigen Betrieb des Gurtstraffers ohne Beeinträchtigung der übrigen Funktionen des Gurtaufrollers.

Weitere vorteilhafte Ausführungsformen ergeben sich aus den Unteransprüchen.

Die Erfindung wird nachfolgend anhand bevorzugter Ausführungsformen ausführlich beschrieben. Dabei wird Bezug genommen auf die beigefügten Zeichnungen, in welchen zeigt:
- Figur 1 einen schematischen Querschnitt durch einen Gurtaufroller gemäß einer ersten Ausführungsform der Erfindung;
- Figur 2 einen schematischen Querschnitt durch einen Gurtaufroller gemäß einer zweiten Ausführungsform der Erfindung;
- Figur 3 einen Längsschnitt durch Gurtspule und Ritzel des Gurtaufrollers aus Figur 2;
- Figur 4 einen Querschnitt durch eine Gurtspule mit Ritzel eines Gurtaufrollers gemäß einer dritten Ausführungsform der Erfindung;
- Figur 5 einen Längsschnitt durch die Gurtspule aus Figur 4 entlang der Linie V-V in Figur 4;
- Figur 6 einen Querschnitt durch ein Ritzel und einen Kolben eines Linearantriebs gemäß einer vierten Ausführungsform der Erfindung;
- Figur 7 einen schematischen Querschnitt durch einen Gurtaufroller gemäß einer fünften Ausführungsform der Erfindung;
- Figur 8 einen Querschnitt durch eine zweite Bauform eines Kolbens für den Gurtaufroller aus Figur 7;
- Figur 9 einen schematischen Querschnitt durch einen Gurtaufroller gemäß einer sechsten Ausführungsform der Erfindung; und
- Figur 10 einen Längsschnitt durch die Gurtspule aus Figur 1 entlang der Linie X-X in Figur 1;
- Figur 11 eine Ansicht eines Ritzels und eines Kolbens eines Linearantriebs gemäß einer siebten Ausführungsform der Erfindung in einem ersten Zustand;
- Figur 12 eine Ansicht des Ritzels und des Kolbens aus Figur 14 in einem zweiten Zustand;
- Figur 13 eine Ansicht des Ritzels aus Figur 11;
- Figur 14 eine Ansicht eines Ritzels und eines Kolbens eines Linearantriebs gemäß einer achten Ausführungsform der Erfindung in einem ersten Zustand; und
- Figur 15 eine Ansicht des Ritzels und des Kolbens aus Figur 11 in einem zweiten Zustand.

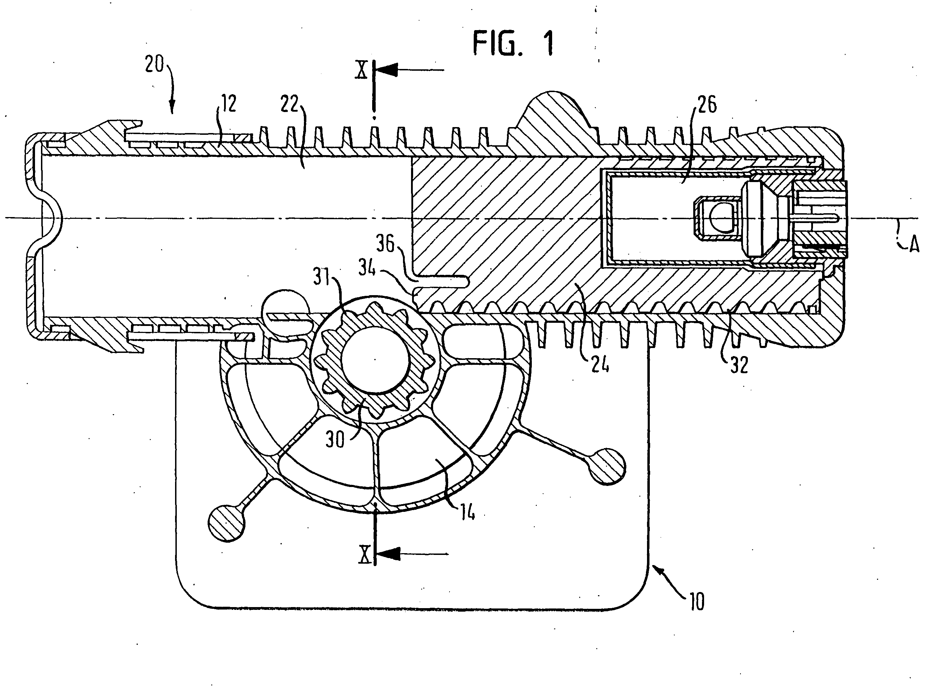

Der in Figur 1 dargestellte Gurtaufroller 10 ist mit einer drehbar gelagerten Gurtspule 14 und einem Gurtstraffer ausgestattet, der einen Antrieb 20 mit einem Zylinder 22 und einem darin verschiebbar geführten Kolben 24 aufweist. Der Zylinder 22 ist in einem Gehäuse 12 des Antriebs 20 ausgebildet und enthält einen Treibsatz 26 zur Erzeugung von Druckgas, mit welchem der Kolben 24 angetrieben werden kann. Der Antrieb 20 wirkt auf die Gurtspule 14, an der einstückig ein Ritzel 30 mit Zähnen 31 ausgebildet ist, das in den Zylinder 22 ragt. Der Kolben 24 ist mit einer Verzahnung 32 parallel zu seiner Längsachse A versehen, die in das Ritzel 30 greifen kann, wenn der Kolben 24 verschoben wird. Auf diese Weise kann die Gurtspule 14 angetrieben werden, um Gurtband aufzurollen und dadurch eine Gurtlose zu beseitigen.

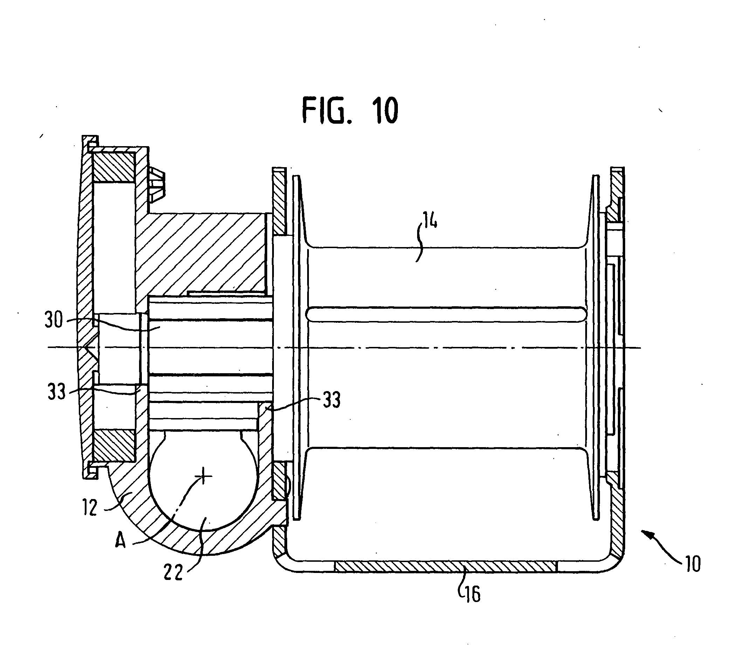

Im Längsschnitt des Gurtaufrollers 10 in Figur 10 ist zu sehen, daß das Ritzel 30 beidseitig im Gehäuse 12 von Lagerstellen 33 gelagert ist. Damit kann das Gehäuse 12 ein beim Antrieb des Ritzels 30 durch den Kolben 24 auftretendes Quermoment aufnehmen, wodurch vermieden wird, daß das Ritzel 30 aus der Längsachse A wandert. Vorteilhaft können sowohl der Zylinder 22 als auch das Gehäuse 12 kostengünstig einstückig, beispielsweise aus Druckguß hergestellt sein.In Figur 1 ist der Kolben 24 in seiner Ausgangsstellung dargestellt, in der sich die Verzahnung 32 noch außerhalb des Eingriffs des Ritzels 30 befindet, damit sich die Gurtspule 14 frei drehen kann. Die ersten Zähne der Verzahnung 32 am vorderen Ende des Kolbens 24 bilden einen Einlaufabschnitt 34, der als nachgiebiges Element gestaltet ist. Zu diesem Zweck ist am vorderen Ende des Kolbens 24, in der Figur oberhalb der Verzahnung 32, ein Schlitz 36 vorgesehen, der sich parallel zur Verzahnung 32 erstreckt. Dadurch kann der Einlaufabschnitt 34 plastisch verformt werden, wenn beim Einlauf der Verzahnung 32 in das Ritzel 30 zufällig Zahn auf Zahn trifft. In diesem Fall wird der Einlaufabschnitt 34 in Figur 1 nach oben gebogen. Dadurch wird zum einen kinetische Energie abgebaut, zum anderen wird das Ritzel 30 in Drehung versetzt, damit der nächste Zahn 31 des Ritzels 30 mit der Verzahnung 32 in Eingriff kommen kann. Auf diese Weise ist ein Blockieren des Kolbens 24 zuverlässig verhindert.

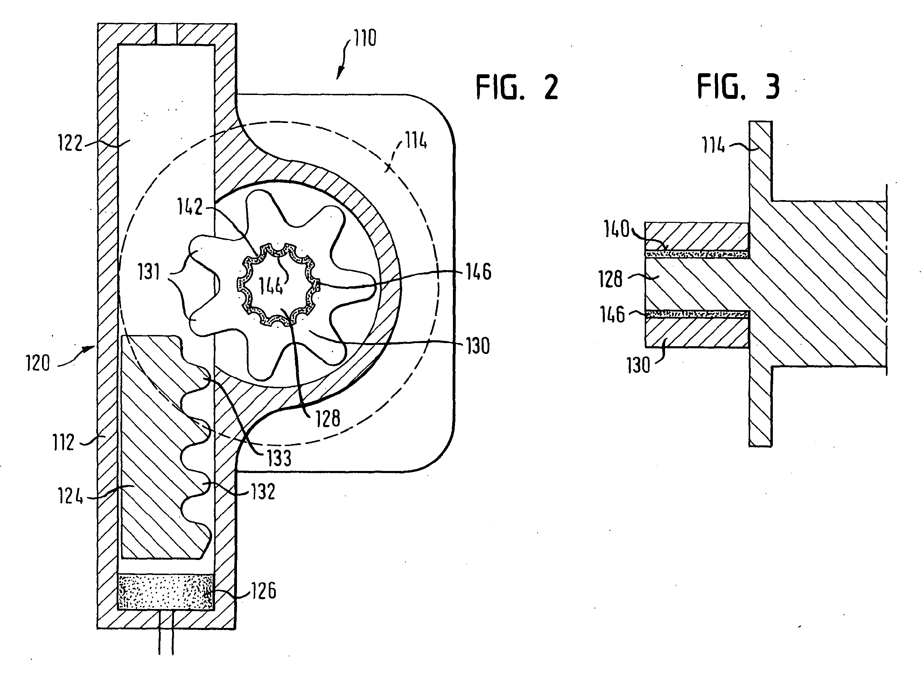

In den Figuren 2 und 3 ist ein Gurtaufroller gemäß einer zweiten Ausführungsform der Erfindung zu sehen, bei dessen Beschreibung für bereits bekannte Bauteile um 100 erhöhte Bezugszeichen verwendet werden.

In dieser Ausführungsform ist die Gurtspule 114 mit einem Wellenfortsatz 128 versehen, auf welchem ein Ritzel 130 sitzt, in welches die Verzahnung 132 des Kolbens 124 greifen kann. Das Ritzel 130 weist eine Bohrung 140 mit einer Innenverzahnung 142 auf, in die eine am Wellenfortsatz 128 ausgebildete Außenverzahnung 144 greift. In einem Spaltraum zwischen der Innenverzahnung 142 und der Außenverzahnung 144 befindet sich ein nachgiebiges Element in Form eines elastischen Körpers 146. Der elastische Körper 146 besteht in der beschriebenen Ausführungsform aus einem weichen Material, beispielsweise Kunststoff. Alternativ kann als nachgiebiges Element jedoch auch ein anderer plastisch und/oder elastisch verformbarer Körper, etwa aus Aluminium, zur Anwendung kommen. Besonders einfach ist das Ausfüllen des Spaltraums mit einem elastischen Vergußmaterial.

In der Ausgangsstellung befindet sich die Verzahnung 132 des Kolbens 124, wie in Figur 2 dargestellt, außerhalb des Eingriffs des Ritzels 130, sodaß sich die Gurtspule 114 ungehindert vom Kolben 124 drehen kann.

Zur Auslösung des Gurtstraffers wird der Treibsatz 126 gezündet, wodurch sich der Kolben 124 auf das Ritzel 130 zu bewegt. Dabei gerät die Verzahnung 132 des Kolbens 124 in Eingriff mit den Zähnen 131 des Ritzels 130. Trifft dabei der erste Zahn 133 der Verzahnung 132 zufälligerweise auf einen Zahn 131 des Ritzels 130, so kann letzteres dank des elastischen Körpers 146 genügend nachgeben, um den ersten Zahn 133 des Kolbens 124 passieren zu lassen. Der betreffende Zahn des Ritzels 130 kann dann in die Lücke hinter dem ersten Zahn 133 der Verzahnung 132 am Kolben 124 greifen, so daß ein zuverlässiger Einlauf der Verzahnung 132 in das Ritzel 130 gewährleistet ist.

Das Vorhandensein der Innenverzahnung 142 und der Außenverzahnung 144 ist nicht zwingend, jedoch bietet diese Gestaltung den Vorteil einer guten Kraftübertragung zwischen Ritzel 130 und Spule 114, wobei der elastische Körper 146 im wesentlichen nur Druckkräfte und keine Scherkräfte übertragen muß.

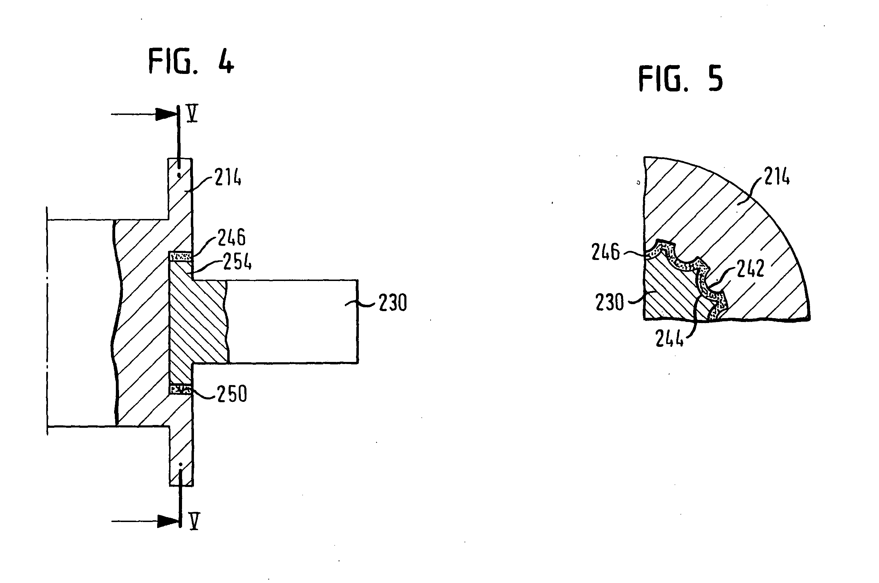

In einer dritten Ausführungsform, die in den Figuren 4 und 5 dargestellt und mit um 200 erhöhten Bezugszeichen versehen ist, ist die Gurtspule 214 mit einer Ausnehmung 250 versehen, in der eine Innenverzahnung 242 ausgebildet ist. Das Ritzel 230 besitzt an seiner zur Gurtspule 214 weisenden Stirnseite einen Flansch 254, der mit einer Außenverzahnung 244 versehen ist. Diese Außenverzahnung 244 greift in die Innenverzahnung 242 der Gurtspule 214, wobei sich wiederum in dem Spaltraum zwischen der Innenverzahnung 242 und der Außenverzahnung 244 ein elastischer Körper 246 befindet.

Diese Ausführungsform hat gegenüber der ersten Ausführungsform den Vorteil, daß bei gleichem Teilkreis des Ritzels 230 der Radius von Innen- und Außenverzahnung 242 bzw. 244 größer ist, so daß dort ein größeres Drehmoment übertragen werden kann, bzw. die Belastung des elastischen Körpers 246 bei gleichem Drehmoment geringer ist.

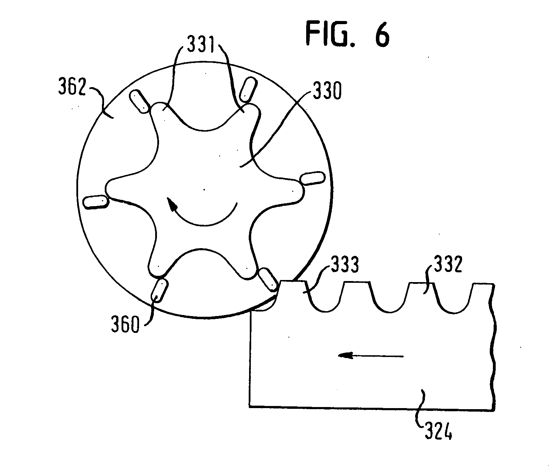

In Figur 6 sind das Ritzel 330 und der Kolben 324 für einen Linearantrieb gemäß einer vierten Ausführungsform der Erfindung dargestellt und mit um 300 erhöhten Bezugszeichen versehen.

In dieser Ausführungsform bilden Vorfixierungskörper 360, die den Zähnen 331 des Ritzels 330 vorgelagert sind, nachgiebige Elemente zwischen der Verzahnung 332 des Kolbens 324 und dem Ritzel 330. Wie in der Figur 6 zu sehen ist, sind die Vorfixierungskörper 360 auf einem Flansch 362 des Ritzels 330 angebracht, der über den Teilkreis des Ritzels hinausragt. Die Vorfixierungskörper 360 sind nachgiebig ausgebildet, sodaß sie sich elastisch und/oder plastisch verformen können, wenn der erste Zahn 333 der Verzahnung 332 so auf einen der Vorfixierungskörper 360 trifft, daß er eine Kontaktkraft ausübt, die radial auf das Ritzel 330 wirkt.

Die Nachgiebigkeit der Vorfixierungskörper 360 verhindert eine Blockade des Kolbens 324 und gestattet es ihm, sich weiterzubewegen, wobei das Ritzel 330 in Drehung versetzt wird, wie es durch den Pfeil in Figur 6 angedeutet ist. Die Nachgiebigkeit der Vorfixierungskörper 360 bewirkt auch einen Abbau kinetischer Energie zum Schutz der Zähne 331 und 333 beim Auftreffen der Verzahnung 332 auf das Ritzel 330.

Es kann alternativ oder zusätzlich vorgesehen sein, daß die Vorfixierungskörper 360 durch den Eingriff der Verzahnung 332 in das Ritzel 330 zum Abbau kinetischer Energie von dem Flansch abgeschert werden.

Alternativ können Vorfixierungskörper auch an den Flanken der Zähne 331 des Ritzels 330 oder am ersten Zahn 333 der Verzahnung 332, beispielsweise als überhöhter Zahnabschnitt, ausgebildet sein.

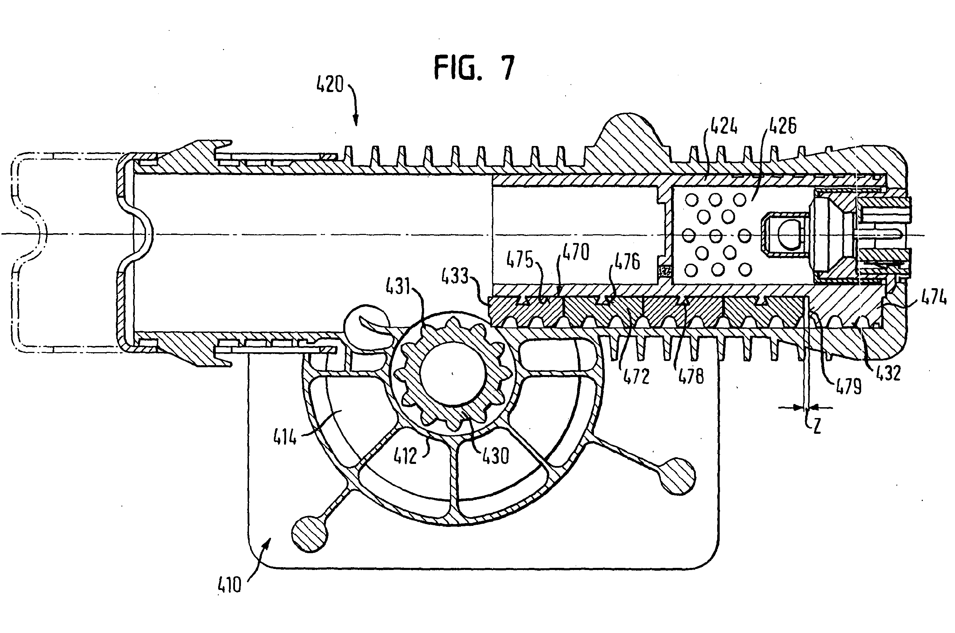

In Figur 7 ist ein Gurtaufroller gemäß einer fünften Ausführungsform der Erfindung gezeigt, bei dessen Beschreibung für bereits bekannte Bauteile um 400 erhöhte Bezugszeichen verwendet werden.

Bei dieser Ausführungsform ist am Kolben 424 eine Ausnehmung 470 vorgesehen. In dieser Ausnehmung 470 sind separate Segmente 472 untergebracht, welche auf ihrer Vorderseite Zähne aufweisen, die den vorderen Teil der Verzahnung 432 bilden. Der hintere Teil der Verzahnung ist an einem Absatz 474 des Kolbens ausgebildet. Auf der Rückseite der Segmente 472, mit der sie an einer Gleitfläche 475 am Kolben 424 anliegen, sind Ausnehmungen 476 vorgesehen, in die am Kolben ausgebildete Zapfen 478 greifen. Die zur Gleitfläche 475 senkrechte Fläche des Absatzes 474, welche die Ausnehmung 470 begrenzt, bildet eine Stützfläche 479, wobei zwischen der Stützfläche 479 und den Segmenten 472 ein Spalt Z vorgesehen ist.

Die Zapfen 478 bilden ein nachgiebiges Element zwischen dem Kolben und dem Ritzel 430, sodaß bei einem ungünstigen Aufeinandertreffen des ersten Zahnes 433 der Verzahnung 432 und der Zähne 431 des Ritzels 430 die Segmente 472 um die Länge Z verschiebbar sind, bis die Segmente 472 an der Stützfläche 479 anliegen. Dadurch wird der Stoß beim Aufeinandertreffen der Zähne gedämpft, und das Ritzel 430 wird in Drehung versetzt, bis die Verzahnung 432 in das Ritzel 430 greifen kann, ohne daß es zu einer Blockade des Kolbens 424 kommt.

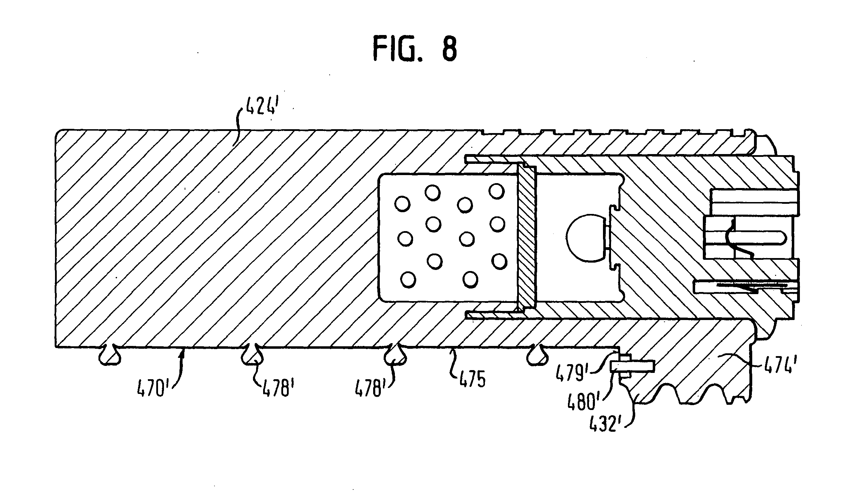

In Figur 8 ist eine Variante eines Kolbens 424' für den Antrieb aus Figur 7 zu sehen. Bei diesem Kolben ist der Absatz 474' mit einem Dämpfungselement 480' ausgestattet, das ein zweites nachgiebiges Element zwischen Kolben 424 und Ritzel bildet. Das Dämpfungselement 480' sitzt in einer Bohrung in der Stützfläche 479' am Absatz 474'. Bei einer Verschiebung der Segmente 472, wie sie vorher beschreiben wurde, kann das Dämpfungselement 480' zum Schutz der Zähne 431 und 433 Energie aufnehmen, indem es elastisch gestaucht und/oder verformt wird.

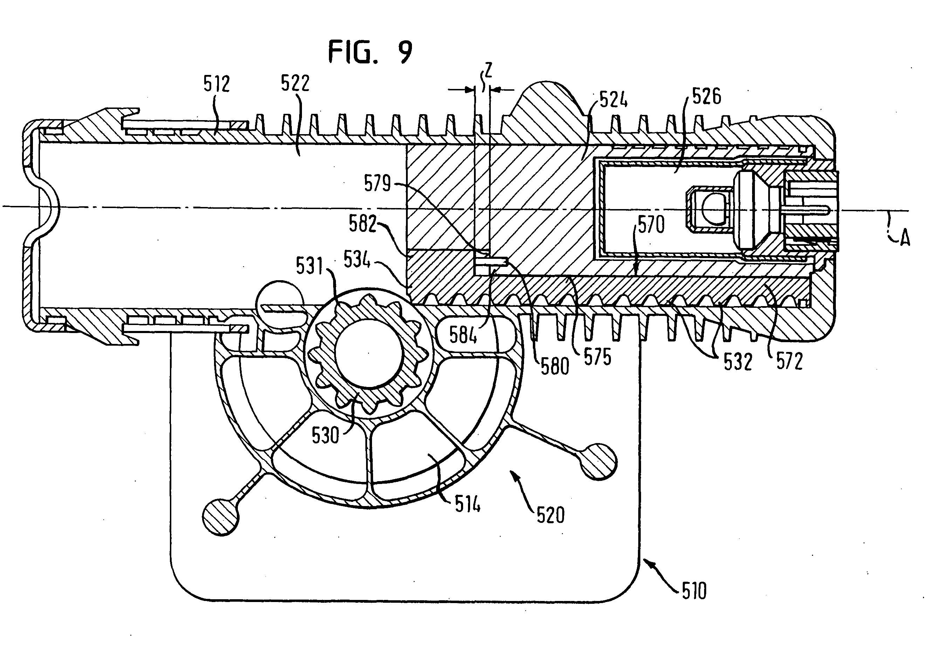

In einer sechsten Ausführungsform, die in Figur 9 gezeigt ist, ist die gesamte Verzahnung 532 an einem vom Kolben 524 getrennten Segment 572 ausgebildet, das sich über die gesamte Länge des Kolbens 524 erstreckt und an einer Gleitfläche 575 am Kolben 524 anliegt. Das Segment 572 weist im Bereich des Einlaufabschnitts 534 auf seiner Rückseite einen Absatz 582 auf. Entsprechend ist in der Ausnehmung 570 am Kolben 524 eine Stufe 584 mit einer zur Gleitfläche 575 senkrechten Stützfläche 579 ausgebildet. Zwischen der Stützfläche 579 und dem Absatz 582 ist ein Spalt Z gebildet, in den sich ein Dämpfungselement 580 erstreckt, das in einer Bohrung in der Stützfläche 579 sitzt und dieselbe Funktion erfüllt, wie das in der vorigen Ausführungsform beschriebene Dämpfungselement 480'.

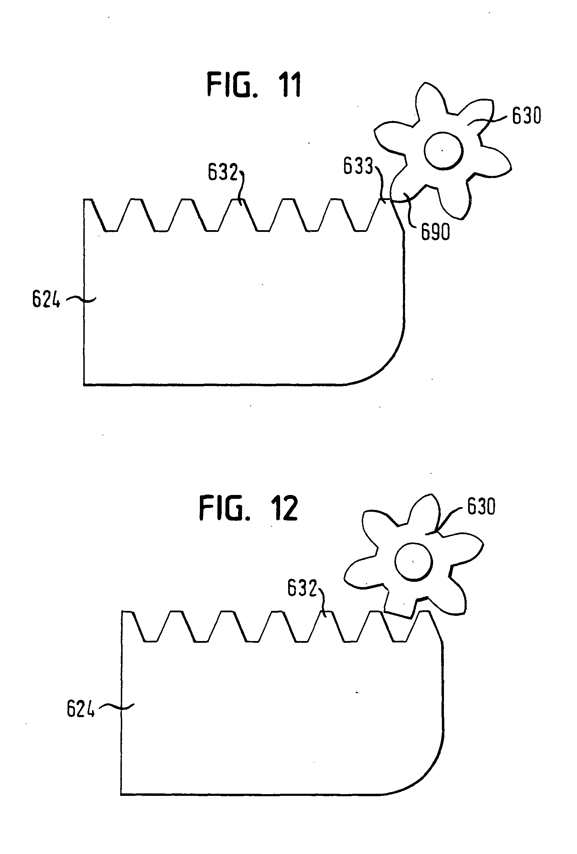

In den Figuren 11 und 12 sind ein Ritzel 630 und der Kolben 624 für einen Linearantrieb gemäß einer siebten Ausführungsform der Erfindung zu sehen.

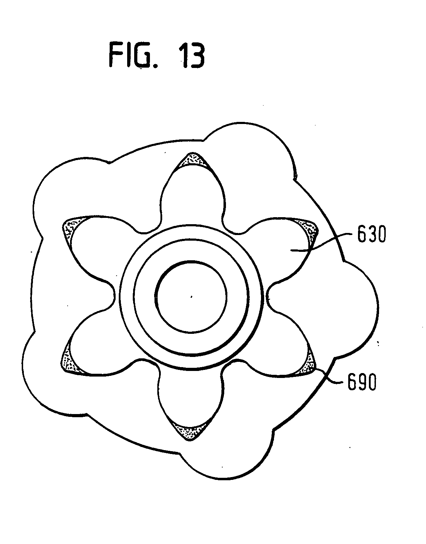

In dieser Ausführungsform sind die Zahnspitzen 690 am Ritzel 630, das in Figur 13 vergrößert dargestellt ist, verformbar und bilden damit nachgiebige Elemente, die das Blockieren beim Einlaufen der Verzahnung 632 verhindern. Wenn der erste Zahn 633 der Verzahnung 632 so auf einen der Zähne des Ritzels 630 trifft, daß er eine Kontaktkraft ausübt, die radial auf das Ritzel 330 wirkt (Figur 11), dann kann sich die im Kontakt befindliche Zahnspitze 690 elastisch und/oder plastisch verformen, so daß der Zahn des Ritzels 630 in die Lücke hinter dem ersten Zahn der Verzahnung 632 (Figur 12) greifen kann. Dadurch ist ein blockierfreier Einlauf der Verzahnung 632 in das Ritzel 630 gewährleistet.

Die Nachgiebigkeit der Zahnspitzen 690 wird in der dargestellten Ausführungsform dadurch erreicht, daß sie aus einem andern, weicheren Material als das übrige Ritzel 630 bestehen. Alternativ können die Zahnspitzen auch aus dem selben Material bestehen wie das übrige Ritzel 630, wobei die Nachgiebigkeit durch die gestalterische und/oder strukturelle Ausbildung der Zahnspitzen 690 gegeben ist.

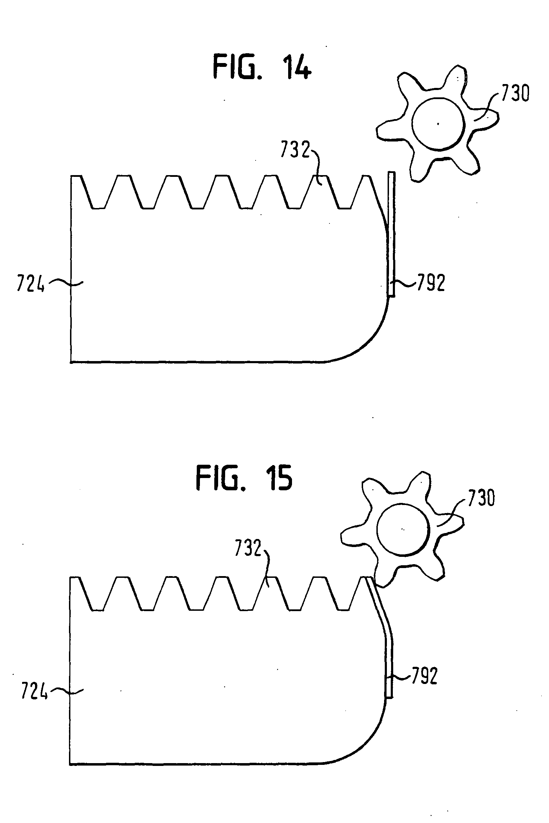

In den Figuren 14 und 15 schließlich sind ein Ritzel 730 und der Kolben 724 für einen Linearantrieb gemäß einer achten Ausführungsform der Erfindung zu sehen.

In dieser Ausführungsform ist das nachgiebige Element in Gestalt eines verformbaren Federelements 792 realisiert, das der Verzahnung 732 vorangestellt ist. Beim Einlauf der Verzahnung 732 in das Ritzel 730 trifft das Federelement 792 auf einen Zahn des Ritzels 730. Dadurch wird das Ritzel 730 zum einen in eine Stellung weitergedreht, in der eine Blockierung des Kolbens 724 durch Aufeinandertreffen von Zähnen der Verzahnung 732 und des Ritzels 730 nicht mehr möglich ist. Zum anderen wird dabei das Federblech verformt (Figur 15), wodurch Energie abgebaut und damit der Einlauf der Verzahnung 732 in das Ritzel 730 gedämpft wird.

Das Federelement 732 kann beispielsweise in Form eines Federblechs aus Metall oder einer Federzunge aus Kunststoff vorgesehen sein. Vorteilhafterweise ist der erste Zahn der Verzahnung 732 mit geringeren Abmessungen ausgebildet als die folgenden Zähne. Erst zusammen mit dem verformten Federelement 792 hat er dieselbe Gestalt und Größe wie die übrigen Zähne. Dadurch ist gewährleistet, daß sich der Modul der Verzahnung 732 durch das Federelement 792 nicht verändert.

## Patentansprüche

1. Linearantrieb (20; 120; 420; 520) mit einem Zylinder (22; 122; 422; 522) und einem darin verschiebbar geführten Kolben (24; 124; 324; 424; 424'; 524; 624; 724), und mit einem Ritzel (30; 130; 230; 330; 430; 530; 630; 730), wobei der Kolben mit einer Verzahnung (32; 132; 332; 432; 432'; 532; 632; 732) versehen ist, die in das Ritzel greifen kann, um es bei einer Verschiebung des Kolbens in Drehung zu versetzen, **dadurch gekennzeichnet, daß** wenigstens ein nachgiebiges Element (34; 46; 146; 360; 478, 480; 480'; 580; 690; 792) vorgesehen ist, das beim Einlaufen der Verzahnung (32; 132; 332; 432; 432'; 532; 631; 732) in das Ritzel (30; 130; 230; 330; 430; 530; 630; 730) ein Blockieren verhindert

2. Linearantrieb nach Anspruch 1, **dadurch gekennzeichnet, daß** das wenigstens eine nachgiebige Element von einem Vorfixierungskörper gebildet ist, der vorzugsweise dem ersten Zahn der Verzahnung vorgelagert ist.

3. Linearantrieb nach Anspruch 1 oder 2, **dadurch gekennzeichnet, daß** das wenigstens eine nachgiebige Element von Vorfixierungskörpern (360) gebildet ist, die allen Zähnen (331) des Ritzels (330) vorgelagert sind.

4. Linearantrieb nach Anspruch 2 oder 3, **dadurch gekennzeichnet, daß** der oder die Vorfixierungskörper (360) elastisch nachgiebig sind.

5. Linearantrieb nach einem der Ansprüche 2 bis 4, **dadurch gekennzeichnet, daß** der oder die Vorfixierungskörper (360) beim Einlauf des Ritzels (360) in die Verzahnung (332) abscherbar sind.

6. Linearantrieb nach Anspruch 1, **dadurch gekennzeichnet, daß** nachgiebige Elemente von verformbaren Zahnspitzen (690) des Ritzels (630) gebildet sind.

7. Linearantrieb nach Anspruch 1, **dadurch gekennzeichnet, daß** das nachgiebige Element (34; 792) an der Verzahnung (32; 732) des Kolbens (24; 724) angeordnet ist.

8. Linearantrieb nach Anspruch 7, **dadurch gekennzeichnet, daß** das nachgiebige Element von einem plastisch verformbaren Einlaufabschnitt (34) der Verzahnung (32) des Kolbens (24) gebildet ist.

9. Linearantrieb nach Anspruch 7, **dadurch gekennzeichnet, daß** das nachgiebige Element von einem verformbaren Federelement (792) gebildet ist, das der Verzahnung (732) des Kolbens (724) vorangestellt ist.

10. Linearantrieb nach Anspruch 1, **dadurch gekennzeichnet, daß** ein Abtriebselement (14; 114; 414; 514) vorgesehen ist und das nachgiebige Element (146; 246) zwischen dem Abtriebselement (114; 214) und dem Ritzel (130; 230) vorgesehen ist, wo es dem Ritzel ein Spiel gegenüber dem Abtriebselement gestattet.

11. Linearantrieb nach Anspruch 10, **dadurch gekennzeichnet, daß** das Ritzel (130) eine Bohrung (140) mit einer Innenverzahnung (142) aufweist, in die eine Außenverzahnung (144) des Abtriebselements (114) greift.

12. Linearantrieb nach Anspruch 10, **dadurch gekennzeichnet, daß** das Abtriebselement (214) eine Ausnehmung (250) mit einer Innenverzahnung (242) aufweist, in die eine Außenverzahnung (244) des Ritzels (230) greift.

13. Linearantrieb nach einem der Ansprüche 10 bis 12, **dadurch gekennzeichnet, daß** sich das nachgiebige Element (146; 246) in einem Spaltraum zwischen der Innenverzahnung (142; 242) und der Außenverzahnung (144; 244) befindet.

14. Linearantrieb nach Anspruch 1, **dadurch gekennzeichnet, daß** wenigstens ein Teil der Verzahnung (432; 432'; 532) des Kolbens (425; 425'; 524) an einem separaten Zahnsegment (472; 572) ausgebildet ist und das nachgiebige Element (478, 480; 478'; 580) zwischen dem Zahnsegment und dem Kolben angeordnet ist.

15. Linearantrieb nach Anspruch 14, **dadurch gekennzeichnet, daß** zwischen dem Zahnsegment (472; 572) und dem Kolben (425; 425'; 524) ein Spalt (Z) vorgesehen ist, der bei einer Verschiebung des Kolbens ein Spiel zwischen Kolben und Ritzel (430; 530) gestattet.

16. Linearantrieb nach einem der Ansprüche 10 bis 15, **dadurch gekennzeichnet, daß** das nachgiebige Element aus einem elastischen Körper (146; 246) besteht.

17. Linearantrieb nach einem der Ansprüche 10 bis 16, **dadurch gekennzeichnet, daß** das nachgiebige Element aus einem plastisch verformbaren Körper besteht.

18. Linearantrieb nach einem der vorhergehenden Ansprüche, **dadurch gekennzeichnet, daß** der Kolben (24; 124; 324; 424; 424'; 524) als Druckgußteil hergestellt ist.

19. Gurtaufroller (10; 110; 410; 510) mit einer Gurtspule (14; 114; 414; 514) und einem Gurtstraffer, der einen Linearantrieb (20; 120; 420; 520) nach einem der vorhergehenden Ansprüche aufweist.

20. Gurtaufroller nach Anspruch 19, **dadurch gekennzeichnet, daß** das Ritzel (30; 130; 230; 330; 430; 530) mit der Gurtspule (14; 114; 214; 414; 514) gekoppelt ist.

21. Gurtaufroller nach Anspruch 20, **dadurch gekennzeichnet, daß** die Gurtspule (114) einen Wellenfortsatz (128) aufweist, auf dem das Ritzel (130) sitzt.

22. Gurtaufroller nach Anspruch 19, **dadurch gekennzeichnet, daß** das Ritzel (230) einen Flansch (254) aufweist, der in eine Ausnehmung (250) an der Gurtspule greift.

23. Gurtaufroller nach einem der vorhergehenden Ansprüche, **dadurch gekennzeichnet, daß** ein Gehäuse (12; 112; 512) vorgesehen ist, in dem einstückig sowohl der Zylinder (22; 122; 422; 522) als auch Lagerstellen (33) zu beiden Seiten des Ritzels (30; 130; 230; 330; 430; 530) ausgebildet sind.

24. Gurtaufroller nach einem der vorhergehenden Ansprüche, **dadurch gekennzeichnet, daß** das Gehäuse (12; 112; 512) als Druckgußteil hergestellt ist.
